# EUROPEAN PATENT SPECIFICATION

(11) **EP 1 826 503 B1**
(45) Date of publication and mention of the grant of the patent: **11.05.2011**
(21) Application number: 07103258.5
(22) Date of filing: 28.02.2007
(51) Int. Cl.: F24J 2/00, F24D 3/10, F24D 12/02

(54) **Kit for distribution, management, measurement and metering of the energy in a solar-heating system, possibly associated to other energy sources**
Kit zur Verteilung, Verwaltung und Messung der Energie in einem solarbetriebenen System, das mit anderen Energiequellen verbunden sein kann
Kit pour distribuer, gérer, mesurer et doser l'énergie dans un système thermique solaire, possiblement associé avec d'autres sources d'énergie

(30) Priority: 28.02.2006 IT RM20060035 U
(43) Date of publication of application: 29.08.2007
(73) Proprietor: COSTRUZIONI SOLARI S.R.L., 73020 Cavallino LE (IT)
(72) Inventor: Rizzo, Luigi, I-73020, Cavallino (LE) (IT)

(56) References cited:
- DE-A1- 3 245 416
- DE-U1- 20 019 953
- US-A- 5 381 902

## Description

The present invention basically relates to the sector of thermal systems for exploitation of solar energy.

Solar-heating systems are normally constituted by a solar circuit, comprising at least one solar panel and pipes for delivery and return of the thermal-carrier fluid, as well as a series of devices designed to control the distribution, management, measurement and metering of energy in the solar-heating system, also in relation to other energy sources used in said system, such as for example a fireplace-boiler and/or a boiler. Such a system is known from document DE-U-20019953.

A problem that is common to said known heating systems is represented by the fact that said control devices must be properly installed, configured and calibrated both with respect to one another and with respect to the system on which they are to act.

A second problem of the known art is represented by the fact that said control devices must be installed by qualified staff having a knowledge of the problems of each of said devices, which differ according to whether they are devices for management, measurement and metering, or distribution of energy.

A further problem of current solar-heating systems, consists in the difficulty of managing the other energy sources appropriately in order to guarantee full exploitation of the contribution coming from the solar-heating system when the latter is available.

The main purpose of the present invention is to provide a single apparatus or kit, comprised in which are all or part of said control devices, according to the requirements of the system, said control devices being already installed in compliance with the law and tested in the factory, thus guaranteeing proper operation and enabling rapid and immediate installation of the kit.

The above has been obtained, according to the present invention by providing a kit comprising a container, which contains said control devices and is designed to be installed by means of simple connection of the delivery and return pipes of the solar circuit and of the possible circuit for expulsion and recovery of the thermal-carrier fluid, as well as of the connection cables for electrical supply and for the usual probes.

A better understanding of the invention will emerge from the ensuing detailed description and with reference to the attached plate of drawings, which illustrates, purely by way of example, some preferred embodiments. In the drawings:
- Figure 1 shows an automatic filling system and energy-measuring device, in order to manage the solar energy that heats hot water for sanitary purposes;
- Figure 2 shows a second example of Figure 1, with automatic filling and without energy-measuring device;
- Figure 3 shows an example of Figure 1, without automatic filling and with energy-measuring device;
- Figure 4 shows a further example of Figure 1, without automatic filling and without energy-measuring device;
- Figure 5 shows the invention, designed to manage the solar energy together with the energy supplied by a fireplace-boiler and by a boiler for serving a thermo-sanitary system for heating water and for heating environments with radiators;
- Figure 6 shows an embodiment that differs from the preceding one in that heating of the environments occurs via low-temperature radiators (e.g., floor heating);
- Figure 7 shows an embodiment, which is similar to that of Figure 5 but enables interfacing of a closed-vessel (boiler) system with an open-vessel (fireplace-boiler) system; and
- Figures 8, 9 and 10 show, respectively, an enlarged detail of Figures 5, 6 and 7, which is highlighted in the latter figures with a dashed rectangle.

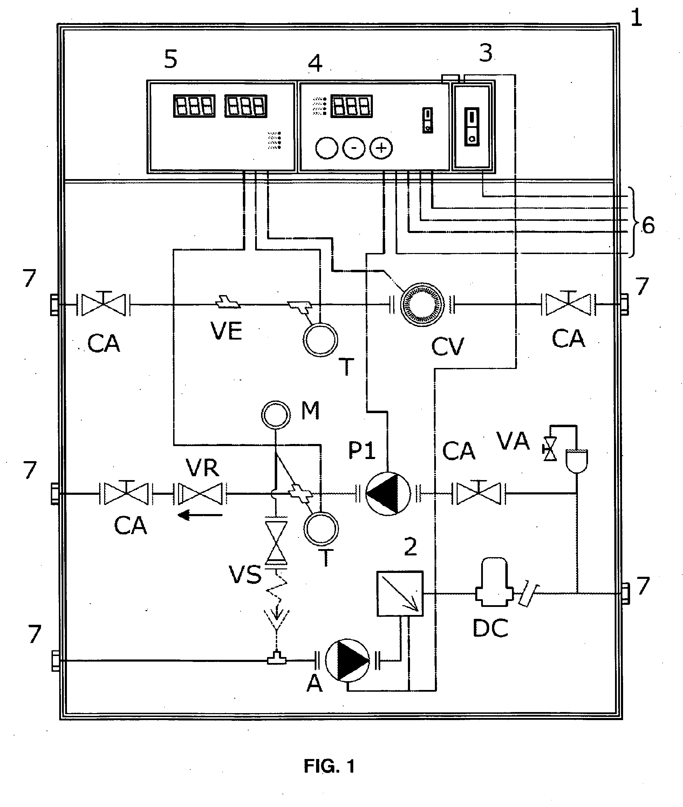

Figures 1 to 4 regard examples that envisage management of just solar energy as source of heat for heating water to be used for sanitary purposes, whilst the subsequent figures regard embodiments in which the solar source is backed up, if necessary, by other sources of heat, such as for example a fireplace-boiler and/or a boiler both for heating water for sanitary purposes and for heating environments.

In all cases, said sources of heat are managed by a single electronic control unit 4.

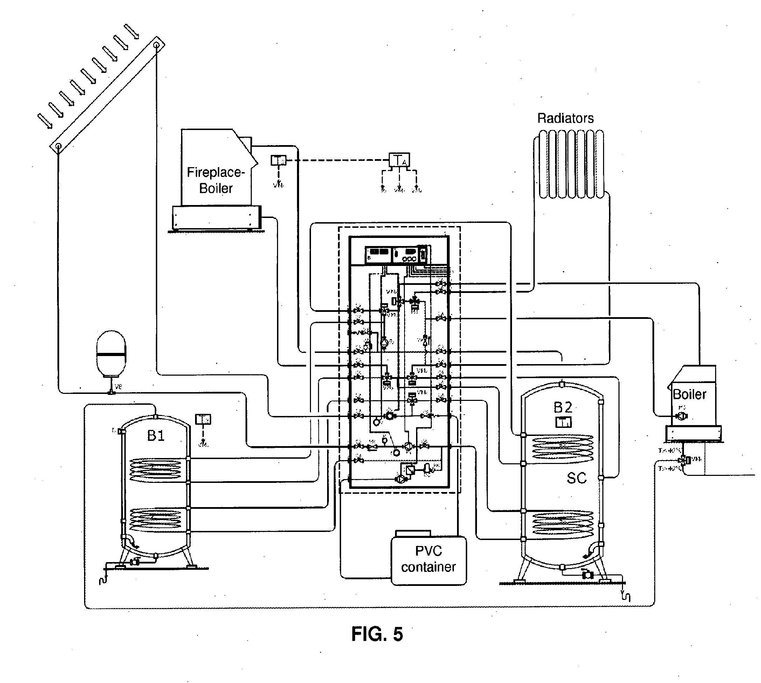

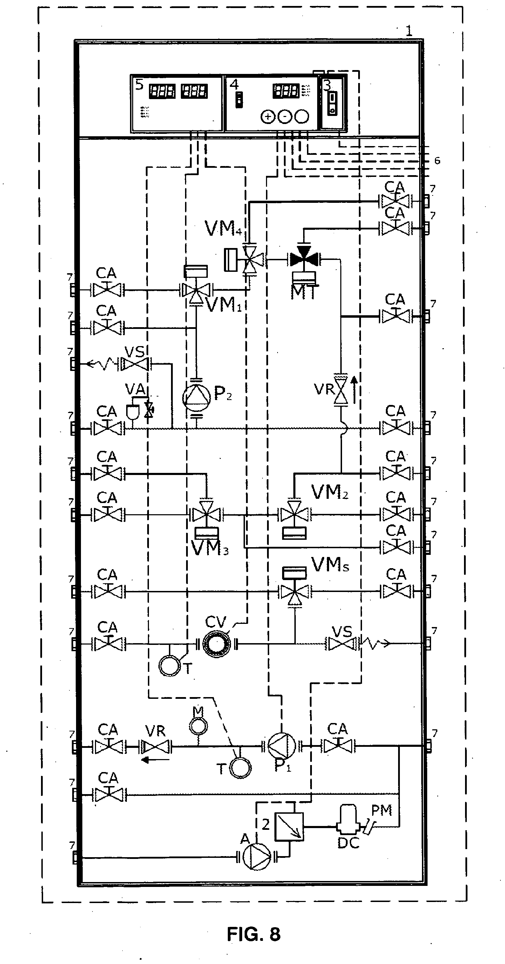

With reference to Figures 5 and 8, which regard the present invention, the kit that is described (referred to hereinafter also as "hydronic unit" or by its commercial name "DOMINO") gathers together, already preassembled, all the hydraulic and electronic devices for distribution, management, measurement and metering of the energy in a solar-heating system and other energy sources for thermal integration.

From the exterior standpoint, the invention presents as a kit made up of a cabinet 1 with a door, inside which the necessary control devices are housed and installed. The interface of the kit with the outside world is advantageously constituted by the electrical connection cables 6 for power supply and for the probes, and by the connectors 7, set laterally, for connection to the delivery and return pipes of the solar-heating system and to the pipe for expulsion and recovery of the thermal-carrier fluid following upon conditions of overpressure.

The components of the kit are:
hydraulic part
   a supporting structure comprising a metal cabinet with a door 1;
   arrest keys CA;
   one or more nonreturn valves VR;
   a solar circulator P₁;
   a circulator for the fireplace-boiler P₂;
   a 4-atm safety valve VS;
   an attachment for the expansion vessel VE;
   a pressure gauge M;
   two thermometers T or pockets for thermal probe;
   one or more automatic air valve VA;
   a volumetric meter CV;
   an autoclave A;
   a device of an *Autoflow* type 2;
   an automatic charging device DC;
   three or more motor-driven deviating valves, of which a deviating valve VM_{S} for the solar circuit, a valve VM₂ for the radiators, and a valve VM₃ for the fireplace-boiler;
   preferably a thermostatic mixer MT;
electronic part
   a main switch 3;
   an electronic control unit 4 for management of the solar-heating system;
   an energy-measuring device 5.

### Description of operation

The hydronic unit according to the present invention has been devised and built to provide the customer and the installer with a complete unit that is simple to apply on the solar-heating system.

The assembly of all the parts, both the electrical ones and the hydraulic ones, is advantageously carried out in the factory, thus guaranteeing efficient operation of each individual component and of the entire complex of devices installed within the cabinet 1.

This enables all the tests necessary for guaranteeing complete functionality of the system to be conducted already in the production stage. Consequently, the subsequent step of installation is extremely simplified: it is sufficient to connect the pipes of the heating system to the connectors 7 of the hydronic unit and the electrical cables 6 for general power supply and for the temperature probes.

From the standpoint of the heating system as a whole, the hydronic unit according to the invention envisages, in addition to proper positioning of the delivery and return branches of the solar-heating system and of the other possible energy sources, nonreturn valves VR, three-way valves VM, and safety and circulation devices, thus enabling measurement and possible monitoring of the temperatures of the heating system and the operating pressure. These data, processed by the electronic control unit 4, enable control of the circulator and hence of the heat exchange between the solar panels and the storage tank. The presence of the volumetric meter CV enables monitoring of the amount of fluid circulating in the heating system, thus enabling evaluations of an energy type of the levels of consumption of the appliances served by the hydronic unit.

The above evaluations can be made electronically by the energy-measuring device 5, which analyses the input data of the volumetric meter CV and of the temperature probes T. The use of the invention enables a convenient management of the data in order to enable a local and/or remote monitoring of the solar-heating system (in the case of remote monitoring, a connection to a modem or other similar device is necessary).

The hydronic unit contains within it also an assembly for automatic charging, which enables recovery of the thermal-carrier liquid, that has been dissipated by the safety valve VS of the solar circuit during maximum expansion, in this way guaranteeing a constant pressure in the solar circuit and its adaptability to the various conditions of operation in time.

As has already been mentioned, the embodiments illustrated in Figures 5 to 10 eliminate the possibility of other energy sources preventing the solar-heating system from yielding its maximum supply in terms of thermal energy.

Generally, in thermal systems the energy contributions of which are provided by a number of sources there exist one or more storage tanks. According to the present invention, a series of control circuits is provided, which set in connection the storage tanks referred to both with the solar collectors and with a fireplace-boiler and a traditional boiler.

This circuitry has the task of bringing about intervention, in sequence, first of the solar-heating system, then of the fireplace-boiler, and lastly of the boiler. According to a peculiar characteristic of the invention, the intervention of the boiler does not act on the entire storage tank but only on its upper part (i.e., the hottest part) or else, alternatively, it can provide the heating directly to the user.

The presence of the electronic control unit 4 also enables management, through the hydronic unit described herein, of the various energy sources.

The hydronic unit, in its most complete version, performs four functions:
1. management of the solar-heating system;
2. measurement and metering of the energy;
3. automatic charging of the system following upon overpressures and leakage of thermal-carrier fluid;
4. management of the fireplace-boiler and of the integration boiler.

It is possible to envisage a version of the system with integration of an anti-condensate circuit for the fireplace-boiler.

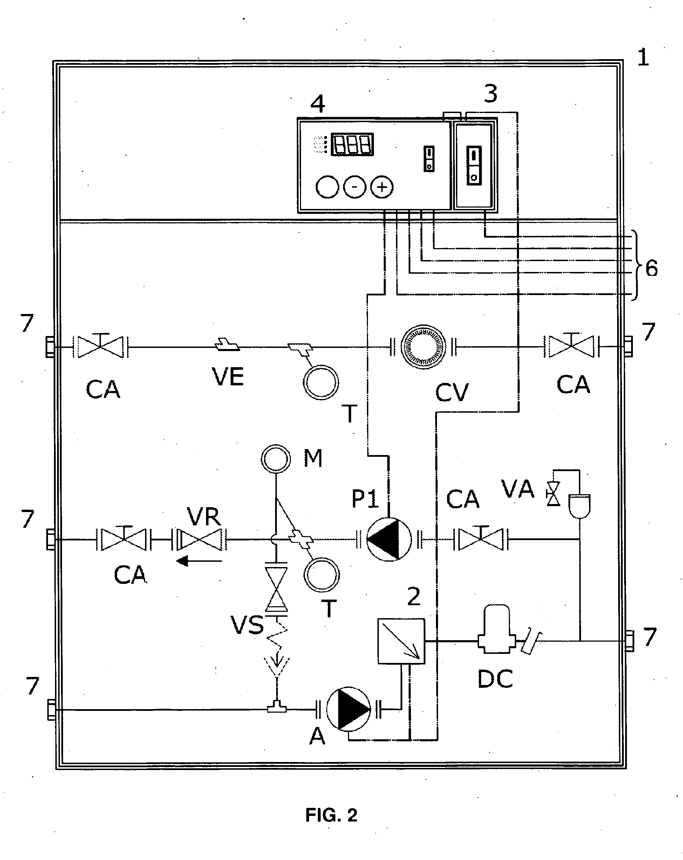

Figure 2 shows a system, which manages just the solar energy for heating water for sanitary purposes, in which the function of energy measurement and metering is absent.

In this case, the electronic energy-measuring device 5 and the temperature probes T on the delivery and return branches of the solar circuit are absent, and said probes are replaced by analogical thermometers.

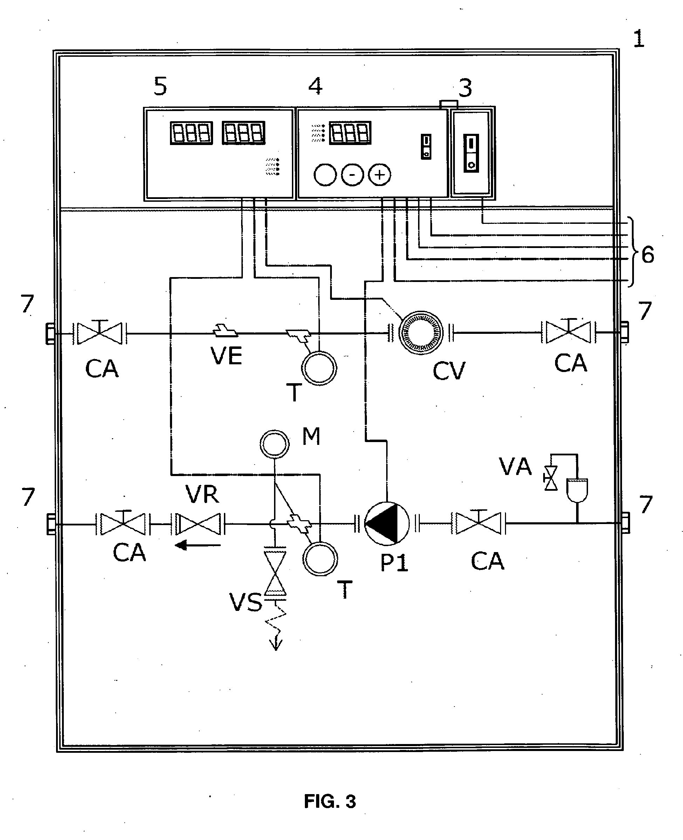

Figure 3 shows a third example, which differs from that of Figure 1 on account of the absence of the automatic filling device.

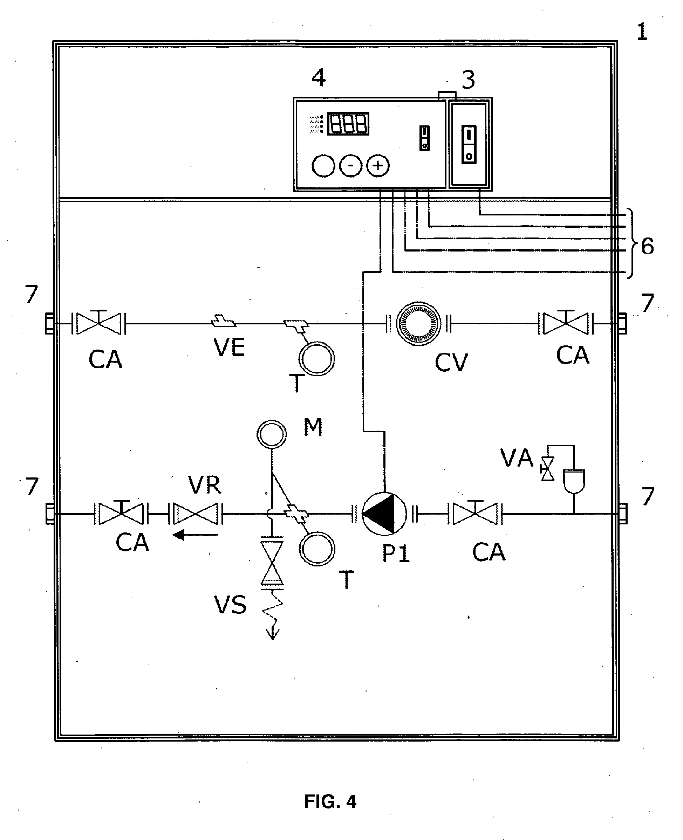

Figure 4 shows a fourth particularly simple example, in which the sole function performed is that of automatic and electronic management of the solar circuit.

Figures 5 and 8, as compared to Figure 1, show the invention, in which there are comprised, in addition to the already described functions regarding management of the solar-heating system for supply of hot water, also those for management of a number of energy sources for serving a system for producing hot water for sanitary purposes and for heating premises. Present in Figures 5 to 10 are two boilers: a first boiler B1 for hot water for sanitary purposes and a second boiler B2 for heating (which functions as "thermal fly-wheel"), in which hot water that is to be sent to heating circuits (radiators or radiant floors) is accumulated. The two boilers B1 and B2 are equipped with two heat exchangers, one for the solar-energy source in the bottom part, and one for integration with another energy source in the top part.

Main components: solar collectors, closed-vessel fireplace-boiler, radiators or radiant floor, a first boiler B1 for hot water for sanitary purposes, a second boiler B2 or thermal fly-wheel for heating purposes, all of which connected to one and the same hydronic unit 1.

### Working principle

With reference to the diagram of the system of the invention (Figure 5), there appears the part already described previously regarding the management of the solar-heating system and of the process of automatic filling, but with the further function that the motor-driven three-way valve VM_{S} controlled by the same control unit 4, has the function of supplying energy first to the first boiler B1 for the production of hot water for sanitary purposes and, after the temperature set has been reached, of deviating the energy flow to the second boiler B2. This configuration also enables management of the heating system according to the various external conditions.

Legend of Figures 5 to 10:
T.A. = environmental thermostat;
T1 = temperature of heating boiler B2;
T2 = temperature of fireplace-boiler water;
T3 = temperature of boiler producing water for sanitary purposes B1;

### POSSIBLE CONFIGURATIONS

### Hypothesis 1: T.A.-ON, T2>50°C and T3<45°C:

The circulator P2 of the fireplace-boiler is active (ON) and, through the deviating valve VM3 of the fireplace-boiler, is set for carrying energy from the fireplace-boiler to the boiler for sanitary purposes B1.

### Hypothesis 2: T.A.-ON, T2>50°C and T3>45°C, circulator P2-ON:

The motor-driven deviating valves of the fireplace-boiler VM3 and of the radiators VM2 are set for connecting the system of the fireplace-boiler directly to the radiators.

### Hypothesis 3: T.A.-OFF, T2>50°C and T3>45°C, circulator P2-ON:

The motor-driven deviating valve VM1 enables connection of the fireplace-boiler with the heat exchanger SC set in the upper part of the second boiler B2 for heating. In this way, the second boiler B2 (with function of thermal fly-wheel) accumulates thermal energy from the fireplace-boiler in addition to the energy supplied thereto by the solar-heating system, providing a stratification of the temperatures within it.

### Hypothesis 4: T.A.-ON, T2<50°C, T1>45°C, circulator P2-ON:

The motor-driven deviating valve VM1 is connected to the radiators and the motor-driven deviating valve VM2 is connected to the second boiler B2, thus enabling transfer of the heat accumulated, produced by the solar source and/or by the fireplace-boiler, to the heating system.

### Hypothesis 5: T.A.-ON, T1<45°C, T2<50°C, P2-OFF, P3-ON (boiler circulator):

The motor-driven deviating valve VM4 is configured for connecting the boiler circuit to the radiators. In this situation, the integration of the hot water for sanitary purposes occurs in the boiler via the motor-driven deviating valve VM5 (not included in the Domino).

In all the above hypotheses, the temperature of delivery to the radiators, which determines the values of temperature indicated for intervention of the various devices, is defined by the value set by the user (according to the type of the radiators) on the thermostatic mixing valve MT comprised in the Domino.

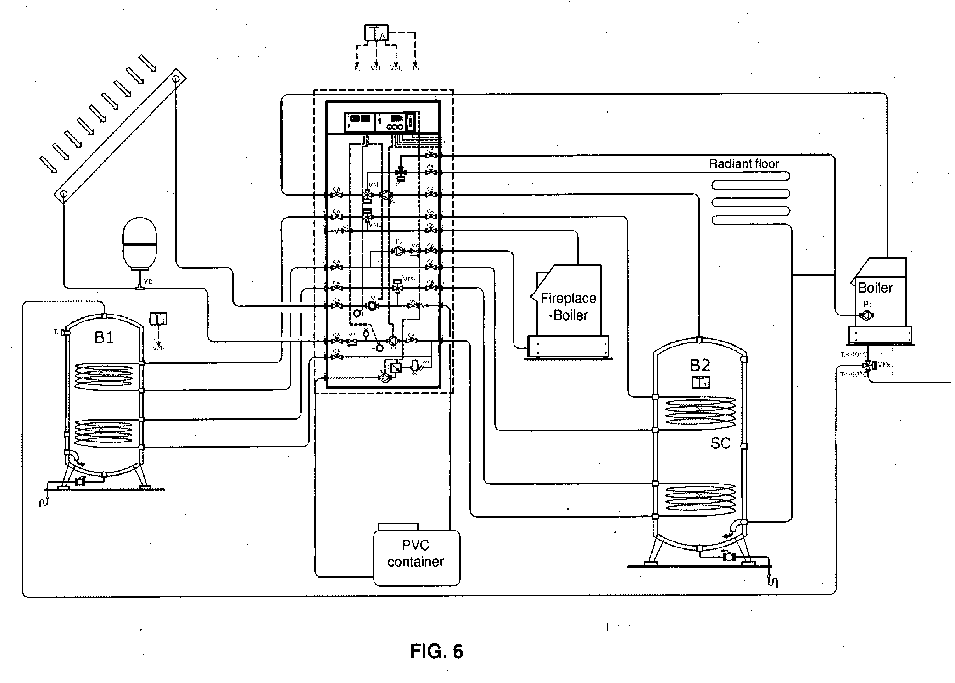

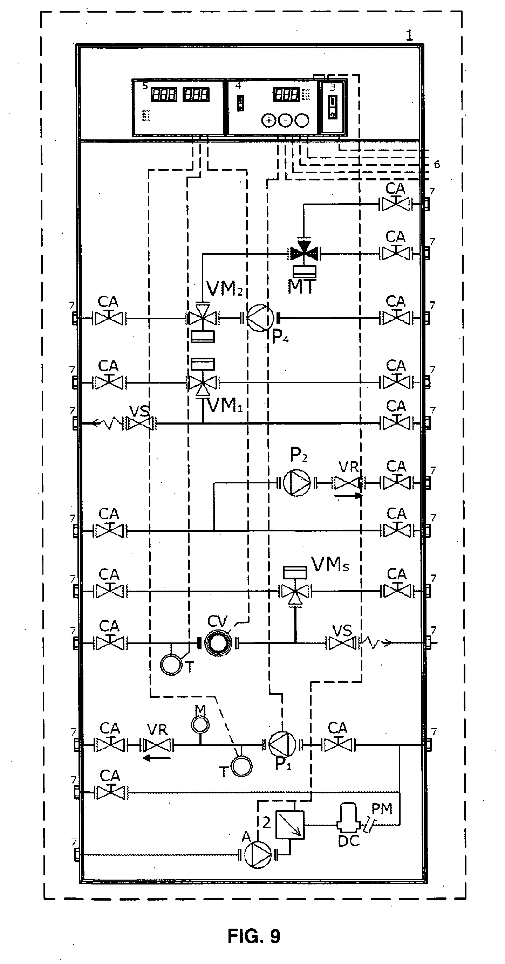

Figures 6 and 9 show an embodiment, which is the most suitable for heating systems that have low-temperature radiators (<40°C) .

The fireplace-boiler can supply its energy to the first boiler B1 for water for sanitary purposes or else to the second boiler B2 for heating, adding its energy to the energy supplied by the solar collectors.

### Hypothesis 1: T.A.-ON, T1>45°C, P2-ON, P3-OFF:

The fly-wheel supplies energy to the radiators.

### Hypothesis 2: T.A.-ON, T1<45°C, P2-OFF, P3-ON:

The boiler supplies energy to the heating system.

With the above configuration, operation of the solar-heating system is guaranteed in all situations, enabling accumulation in the second boiler B2, which has the possibility of intervening only when its conditions of temperature, with the possible intervention of the fireplace-boiler in the heat exchanger SC, are suitable for delivery to the radiators. In this case, the return from the heating system has a temperature certainly lower than the fly-wheel, so that the solar source can still charge energy.

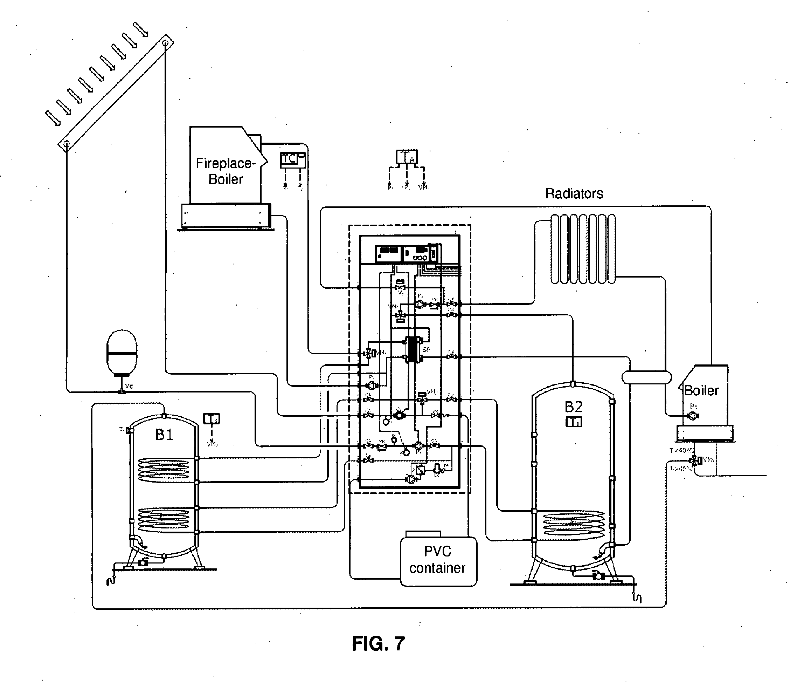

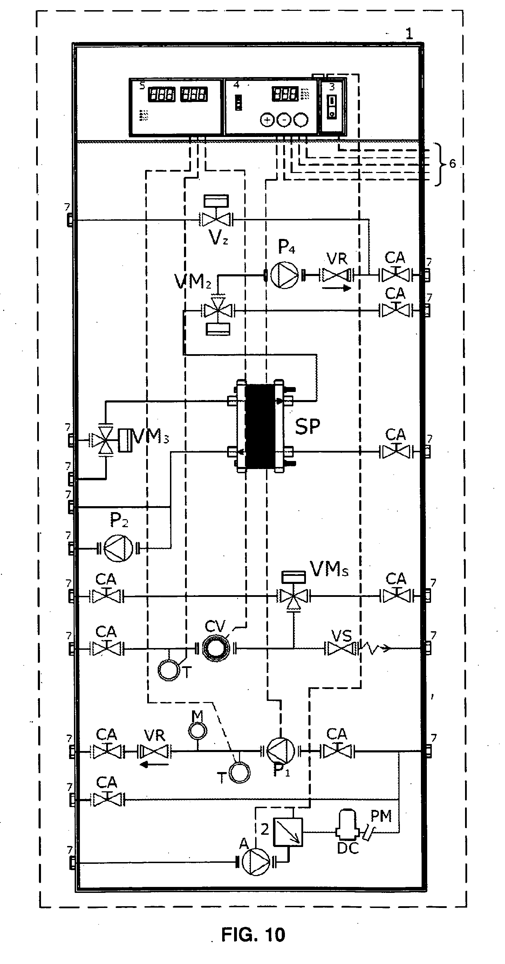

An embodiment of the invention (Figures 7 and 10) envisages that, provided within the hydronic unit is a plate-type heat exchanger SP, designed to enable interfacing of the closed-vessel system of the traditional boiler and the open-vessel system of the fireplace-boiler.

In this technical solution, the contribution of the fireplace-boiler is sent directly to the radiators, with the advantage of enabling dedication of the second boiler B2 exclusively to the accumulation of solar energy, thus increasing the efficiency of the solar circuit itself.

In this configuration, it is necessary to add, in the proximity of the fireplace-boiler, a digital thermometer TC for enabling display of the temperatures T1 and T2 and a LED.

### Hypothesis 1: T1>50°C and LED ON:

The user does not need to light the fireplace-boiler because the second boiler B2 is ready to supply energy to the system. If the fireplace-boiler is already lit, it is not necessary to continue to supply it.

### Hypothesis 2: T1<50°C, T3<45°C, T.A.-ON and LED OFF:

The user lights the fireplace-boiler, then the circulator P2 is activated, and the motor-driven deviating valve VM3 is positioned for giving precedence to the first boiler B1.

### Hypothesis 3: T1<50°C, T3>45°C, T.A.-ON, LED OFF:

The user lights the fireplace-boiler, then the circulator P2 is activated, the deviating valve VM3 deviates to the plate-type heat exchanger SP, the circulator P4 is activated, and the deviating valve VM2 sends the energy produced by the fireplace-boiler directly to radiators.

### Hypothesis 4: T1<50°C, T.A.-ON:

The user decides not to light the fireplace-boiler:

The circulator or pump P4 is turned off, and the boiler and the corresponding pump P3 are turned on. The area valve VZ enables the delivery of heat from the boiler directly to the radiators.

The present invention has been described and illustrated in some of its preferred embodiments, but it is clear that any person skilled in the branch may make modifications and/or replacements that are within the scope of the attached claims.

## Claims

1. Pre-assembled kit for the management of a solar circuit for the supply of hot water for sanitary and heating purposes, comprising a housing and supporting structure (1), with a door, defining an internal compartment to house a plurality of members and elements functional for the management of said solar circuit, including at least an electronic control unit (4) and temperature probes (T), whereby it comprises:
- a plurality of electric connection cables (6) for the power supply and for said probes, directly accessible from outside said housing and supporting structure (1) for the general feed of the electrically fed members and elements located inside said structure (11);
- at least a main switch (3) and a plurality of stop keys (CA);
- a plurality of connectors (7) set laterally directly accessible from outside said housing and supporting structure (1) for connection to the delivery and return pipes of the solar plant and to the pipe for expulsion and recovery of the thermal carrier fluid following super pressure conditions;
- at least a volumetric meter (CV) able to monitor the quantity of fluid circulating in the plant disposed inside said housing and supporting structure (1); comprising at least an energy measuring device (5), disposed inside said housing and supporting structure (1), connected to said volumetric meter (CV) and with said temperature probes (T) for the management by said electronic control unit (4) of other sources of heat, such as a fireplace-boiler and a boiler, wherein a series of control circuits is configured to make first said solar plant and then other sources of heat such as said fireplace-boiler and finally said boiler intervene in sequence according to requirements.

2. Pre-assembled kit as in claim 1, comprising at least an automatic loading device (DC) supplied by the main switch and disposed inside said housing and supporting structure (1), which allows to recover the thermal carrier fluid lost in the step of maximum expansion by a safety valve (VS), thus guaranteeing a constant pressure in the solar circuit and its adaptability to the different working conditions over time.

3. Pre-assembled kit as in any claim hereinbefore, wherein said solar circuit comprises two boilers (B1, B2), respectively a first boiler (B1) for hot water for sanitary purposes and a second boiler (B2) for heating, in which hot water is accumulated for the heating circuits, said two boilers (B1, B2) being equipped with two heat exchangers, one for the solar in the lower part and one (SC) for the integration from another energy source in the upper part, said electronic control unit (4) being configured to supply energy first to said first boiler (B1) for the production of hot water for sanitary purposes and, after reaching the set temperature value, to divert the energy flow toward said second boiler (B2), wherein the kit comprises at least a three-way valve (VMₛ), governed by said electronic control unit (4), to selectively divert the energy flow from said first (B1) to said second (B2) boiler.

4. Pre-assembled kit as in any claim hereinbefore, whereby at least all the components inside said housing and supporting structure (1) are pre-assembled and tested in the factory.

5. Pre-assembled kit as in claim 2, comprising also a plurality of motor-driven three-ways deviating valves (VM₁, VM₂, ...VM₅, VMₛ) and at least a thermostatic mixer (MT) to manage said other sources of heat, such as a fireplace-boiler or a boiler.

6. Pre-assembled kit as in any claim from 2 to 5, comprising at least a plate-type heat exchanger to interface the closed-vessel system of the traditional boiler with the open-vessel system of the fireplace-boiler.

## Patentansprüche

1. Vormontiertes Kit zur Steuerung eines Solarkreislaufs für die Warmwasserversorgung für Sanitär- und Heizungsanlagen, bestehend aus Gehäuse und Stützkonstruktion (1) mit einer Tür, die ein Innenfach definieren, in dem mehrere Bestandteile und Funktionselemente für die Steuerung besagten Solarkreislaufs liegen, einschließlich mindestens einer elektronischen Steuereinheit (4) sowie Temperaturfühler (T), wobei dazugehören:
- eine Vielzahl von Elektroanschlusskabeln (6) für das Netzteil und die vorgenannten Fühler, direkt erreichbar von außerhalb des vorgenannten Gehäuses und der Stützkonstruktion (1), für die allgemeine Versorgung elektrisch gespeister Teile und Elemente, die im Inneren der vorgenannten Struktur liegen (11);
- mindestens ein Hauptschalter (3) und eine Vielzahl von Stopptasten (CA);
- eine Vielzahl von seitlich positionierten Anschlüssen (7), die direkt von außerhalb des vorgenannten Gehäuses und der Stützkonstruktion (1) erreichbar sind und der Anbindung an die Zulauf- und Rücklaufleitungen der Solaranlage und an die Leitung für Abgabe- und Rückgewinnung der Wärmeträgerflüssigkeit in Folge eines Überdrucks dienen;
- mindestens ein Durchflussmengenzähler (CV), der die Flüssigkeitsmenge messen kann, die in der im vorgenannten Gehäuse und der Stützkonstruktion (1) angeordneten Anlage zirkuliert; eingeschlossen ist mindestens ein Energiemessgerät (5), gelegen im vorgenannten Gehäuse und der Stützkonstruktion (1), das angeschlossen ist an vorgenannten Durchflussmengenzähler (CV) sowie vorgenannte Temperaturfühler (T) für die Steuerung über die vorgenannte elektronische Steuereinheit (4) weiterer Wärmequellen, wie ein Kaminerhitzer und ein Boiler, wobei eine Reihe von Regelkreisen so konfiguriert sind, dass je nach Anforderungen nacheinander zuerst die vorgenannte Solaranlage und dann die weiteren Wärmequellen wie vorgenannter Kaminerhitzer und schließlich der Boiler zugeschaltet werden.

2. Vormontiertes Kit gemäß Anspruch 1, **dadurch gekennzeichnet, dass** mindestens eine automatische Ladevorrichtung (DC) existiert, die über den Hauptschalter gespeist wird und in vorgenanntem Gehäuse und der Stützkonstruktion (1) liegt; diese Vorrichtung erlaubt die Rückgewinnung der bei der maximalen Ausdehnung verlorenen Trägerflüssigkeit durch ein Sicherheitsventil (VS) und garantiert somit einen gleichbleibenden Druck im Solarkreislauf und seine Adaptionsfähigkeit entsprechend der langfristig auftretenden unterschiedlichen Arbeitsbedingungen.

3. Vormontiertes Kit gemäß einem der oben genannten Ansprüche, **dadurch gekennzeichnet, dass** besagter Solarkreislauf zwei Boiler (B1, B2) umfasst, und zwar einen ersten Boiler (B1) für Heißwasser für Sanitäreinrichtungen und einen zweiten Boiler (B2) für das Heizen, in denen heißes Wasser für die Heizkreise gespeichert wird, und diese zwei Boiler (B1, B2) sind mit zwei Wärmetauschern ausgestattet, einem für den Solarkreislauf im unteren Bereich und einem (SC) für die Integration einer weiteren Energiequelle im oberen Bereich, wobei besagte elektronische Steuereinheit (4) so konfiguriert ist, dass die Energie zuerst besagtem ersten Boiler (B1) zur Heißwasserproduktion für Sanitärzwecke zugeführt wird und nach Erreichen des vorgegebenen Temperaturwertes der Energiefluss zum besagten zweiten Boiler (B2) umgeleitet wird, wobei das Kit mindestens ein Dreiwegventil (VM_{S}) enthält, das über besagte elektronische Steuereinheit (4) gesteuert wird, um den Energiefluss von besagtem ersten (B1) zu besagtem zweiten Boiler (B2) selektiv umzuleiten.

4. Vormontiertes Kit gemäß einem der obigen Ansprüche, **dadurch gekennzeichnet, dass** zumindest alle Komponenten im Innern des besagten Gehäuses und der Stützkonstruktion (2) im Werk vormontiert und getestet wurden;

5. Vormontiertes Kit gemäß Anspruch 2, **dadurch gekennzeichnet, dass** es auch eine Vielzahl von motorisierten Drei-Wege-Ablenkventilen (VM₁, VM₂,........ VM₅, VMₛ) enthält sowie mindestens ein thermostatisches Mischventil (MT) für den Einsatz mit besagten weiteren Wärmequellen wie einem Kaminerhitzer oder einem Boiler.

6. Vormontiertes Kit gemäß einem der Ansprüche 2 bis 5, **dadurch gekennzeichnet, dass** es mindestens einen Plattenwärmetauscher als Schnittstelle zwischen dem traditionellen Boilersystem mit geschlossenem Behälter und dem System mit offenem Behälter des Kaminerhitzers enthält.

## Revendications

1. Kit pré-assemblé de gestion d'un circuit solaire d'alimentation en eau chaude pour utilisation dans des installations sanitaires et de chauffage, composé d'un boîtier et d'une structure de fixation (1) équipés d'un clapet, formant un compartiment interne pour accueillir plusieurs membres et éléments fonctionnels servant à la gestion dudit circuit solaire, y compris au moins un module de commande électronique (4) et des sondes thermiques (T), dans lequel se trouvent :
- plusieurs câbles de connexion électronique (6) destinés au bloc d'alimentation et auxdites sondes, directement accessibles depuis l'extérieur desdits boîtier et structure de fixation (1) pour alimenter l'ensemble des membres et des éléments qui fonctionnent à l'électricité et sont placés à l'intérieur de ladite structure (11) ;
- au moins un interrupteur principal (3) et plusieurs crans d'arrêt (CA) ;
- plusieurs connecteurs (7) disposés latéralement et accessibles directement depuis l'extérieur desdits boîtier et structure de fixation (1) à des fins de raccordement aux conduites d'alimentation et de retour de la centrale solaire et à la conduite d'évacuation et de récupération du liquide porteur thermique à la suite des conditions de surpression ;
- au moins un compteur volumétrique (CV) capable de contrôler la quantité de liquide en circulation dans la centrale placée dans lesdits boîtier et structure de fixation (1) ; comportant au moins un appareil de mesure d'énergie (5), placé à l'intérieur desdits boîtier et structure de fixation (1), raccordé audit compteur volumétrique (CV) et équipé desdites sondes thermiques (T) pour permettre la gestion par ledit module de commande électronique (4) d'autres sources de chaleur telles qu'un poêle-cheminée et une chaudière, dans lesquels une série de circuits de commande est configurée de sorte que ladite centrale solaire puis les autres sources de chaleur telles que ledit poêle-cheminée et enfin ladite chaudière interviennent de manière consécutive en fonction des besoins.

2. Kit pré-assemblé décrit dans la revendication 1, composé d'au moins un dispositif de chargement automatique (DC) alimenté par l'interrupteur principal et placé à l'intérieur desdits boîtier et structure de fixation (1), qui permet de récupérer le liquide porteur thermique lors de la phase de détente maximale par une valve de sécurité (VS), garantissant ainsi une pression constante dans le circuit solaire ainsi que son adaptabilité aux différentes conditions de travail au fil du temps.

3. Kit pré-assemblé décrit dans les revendications précédentes, dans lequel ledit circuit solaire composé de deux chaudières (B1, B2), respectivement une première chaudière (B1) destinée à l'eau chaude pour utilisation en installation sanitaire ainsi qu'une deuxième chaudière (B2) destinée au chauffage, dans laquelle l'eau chaude s'accumule avant d'accéder aux circuits de chauffage, ces deux chaudières (B1, B2) étant équipées de deux échangeurs thermiques, un pour l'énergie solaire dans la partie inférieure et un (SC) pour intégration à partir d'une autre source d'énergie dans la partie supérieure, ledit module de commande électronique (4) étant configuré de manière à alimenter d'abord la première chaudière (B1) en énergie pour produire de l'eau chaude qui sera utilisée dans les installations sanitaires et, une fois que la valeur de température réglée est atteinte, pour rediriger le flux d'énergie vers la deuxième chaudière (B2), dans laquelle kit comporte au moins un robinet à trois voies (VM_{S}), dirigé par ledit module de commande électronique (4), servant à rediriger le flux d'énergie de manière sélective depuis la première chaudière (B1) vers la deuxième chaudière (B2).

4. Kit pré-assemblé décrit dans les revendications précédentes, dans lequel au moins toutes les composantes situées à l'intérieur des dits boîtier et structure de fixation (2) sont pré-assemblées et testées en usine ;

5. Kit pré-assemblé décrit dans la revendication 2, composé également de plusieurs robinets déviateurs à trois voies motorisés (VM₁, VM₂,........ VM₅, VMₛ) au moins un mélangeur thermostatique (MT) pour gérer lesdites autres sources de chaleur, comme par exemple un poêle-cheminée ou une chaudière.

6. Kit pré-assemblé décrit dans les revendications 2 à 5, composé d'au moins un échangeur thermique à plaques pour assurer la jonction entre le système à réservoir fermé de la chaudière traditionnelle et le système à réservoir ouvert du poêle-cheminée
